# EUROPÄISCHE PATENTSCHRIFT

(11) **EP 0 459 163 B1**
(45) Veröffentlichungstag und Bekanntmachung des Hinweises auf die Patenterteilung: **09.08.1995**
(21) Anmeldenummer: 91106996.1
(22) Anmeldetag: 30.04.1991
(51) Int. Cl.: B01D 29/31, B01D 46/24

(54) **Filterkerze**
Filter candle
Bougie filtrante

(30) Priorität: 26.05.1990 DE 4017071
(43) Veröffentlichungstag der Anmeldung: 04.12.1991
(73) Patentinhaber: Thomas Josef Heimbach GmbH & Co., D-52353 Düren (DE)
(72) Erfinder: Best, Walter, Dr., W-5160 Düren (DE); Janssen, Eberhard, Dr., W-5160 Düren-Echtz (DE)
(74) Vertreter: Paul, Dieter-Alfred, Dipl.-Ing.

(56) Entgegenhaltungen:
- US-A- 2 220 772
- US-A- 3 334 748
- US-A- 3 349 919
- SOVIET PATENTS ABSTRACTS, Section Ch, Woche 8511, Klasse B, AN 85-067143/11, Derwent Publications Ltd, London, GB; & SU-A-584 137 (BELORUSSIAN POLY) 15-08-1984
- IDEM

## Beschreibung

Die Erfindung betrifft eine Filterkerze, insbesondere für Filterapparate für die Gasfiltration, wobei die Filterkerze aus einem eigenstabilen, porösen gesintertem Kunststoff oder gesintertem Keramik- oder Metallpartikeln aller geometrischer Querschnitte besteht.

Unter Filterkerzen versteht man länglich ausgebildete Hohlkörper meist zylindrischen oder anders geometrisch geformten Querschnittes, die an einer Stirnseite geschlossen und an der anderen Stirnseite offen ausgebildet sind und deren Mantelwandungen aus einem filterwirksamen Material besteht. Sie werden in der Regel im Bereich ihrer offenen Stirnseiten in Filterapparaten aufgehängt und meist von außen nach innen durchströmt, so daß sich die herausgefilterten Partikel auf der Außenseite absetzen. (Vgl. Ullmanns Enzyklopädie der technischen Chemie, 4. Auflage, Band 2, Seite 177).

Solche Filterkerzen werden in Temperaturbereichen bis hin zur Heißgasfiltration verwendet. Als filterwirksames Material kommen dabei gesinterte Kunststoffe und Metalle, aber auch Keramikmaterialien in Frage. Solche Filterkerzen sind eigenstabil, d. h. sie sind im wesentlichen starr, so daß eine Formänderung in der Regel die Zerstörung zur Folge hat. Eine solche Filterkerze ist beispielsweise dem DE-U 87 0̸9 0̸95.3 zu entnehmen.

Solche Filterkerzen können nur bis zu bestimmten Dimensionen hergestellt werden, da sie ansonsten kaum zu handhaben, insbesondere zu transportieren und einzubauen wären. Soweit sie aus gesintertem Material bestehen, sind sie in der Regel sehr spröde und deshalb anfällig gegen Zerstörung. Hinzu kommt, daß für die Herstellung von Filterkerzen großer Länge teure Sinteröfen zur Verfügung stehen müßten.

Der Erfindung liegt deshalb die Aufgabe zugrunde, eine Filterkerze bereitzustellen, die einerseits einfach zu handhaben und andererseits kostengünstig herzustellen ist.

Diese Aufgabe wird durch eine Filterkerze gemäß Anspruch 1 gelöst. Solche Filterkerzensegmente sind für sich genommen leicht zu handhaben und deshalb nicht zerstörungsanfällig. Sie können auch - soweit sie aus gesintertem Material bestehen - in kleinen Sinteröfen und in großen Serien hergestellt werden. Beim Einbau in Filterapparate ergänzen sich die Filterkerzensegmente in auseinandergeschobenem Zustand zu großen Filterkerzen, so daß sie auch in Filterapparaten mit hohem Volumendurchsatz eingesetzt werden können. Bei Schäden oder Verstopfung einzelner Bereiche der Filterkerze muß diese nicht vollständig ausgetauscht werden, sondern nur das jeweils betroffene Filterkerzensegment. Hinzu kommt, daß sich der Querschnitt der Filterkerze in auseinandergeschobenem Zustand in einer Richtung verengt. Dies hat zur Folge, daß sich beim Abreinigen in dieser Richtung höhere Gasgeschwindigkeiten ergeben mit der Folge, daß die Abreinigung verbessert wird.

In Ausbildung des Grundgedankens der Erfindung ist vorgesehen, daß die Filterkerzensegmente sich im auseinandergeschobenen Zustand formschlüssig aneinander abstützen. Diese Ausbildung hat den Vorteil, daß die Filterkerze hängend installiert werden kann, ohne daß es zusätzlicher Stützelemente bedarf. Sofern sich die Abstützung über den gesamten Umfang erstreckt, ist hierdurch auch eine Abdichtung der Filterkerzensegmente untereinander gegeben.

Am einfachsten kann die gegenseitige Abstützung im auseinandergeschobenen Zustand durch vorzugsweise an die Filterkerzensegmente angeformte Vorsprünge erfolgen. Sie sollten untenseitig nach innen und obenseitig nach außen vorstehende Stege bilden. Für die Querschnittsform der Stege gibt es verschiedene Möglichkeiten. Sie können beispielsweise U-förmig ausgebildet sein, so daß sich eine Art Labyrinthdichtung ergibt. Es besteht jedoch auch die Möglichkeit, die Stege einfach waagerecht vorstehen zu lassen. Abweichend davon können jedoch die nach innen vorstehenden Stege auch schräg nach unten und die nach außen vorstehenden Stege schräg nach oben gerichtet sein, wodurch sich eine bessere Abdichtung und eine automatische Zentrierung ergibt. Schließlich kommt auch in Frage, daß die nach innen gerichteten Stege rinnenförmig und die nach außen gerichteten Stege wulstförmig - jeweils was ihren Querschnitt angeht - ausgebildet sind.

Eine formschlüssige Abstützung der Filterkerzensegmente läßt sich aber auch dadurch erreichen, daß sie derart konisch ausgebildet sind, daß der untere Durchmesser des jeweils äußeren Filterkerzensegments geringer ist als der obere Durchmesser des jeweils benachbarten, inneren Filterkerzensegments. In diesem Fall bedarf es keiner zusätzlichen Stege oder Vorsprünge, d. h. die Herstellung dieser Filterkerzensegmente ist besonders einfach.

Um eine gut anliegende Abstützung der Flterkerzensegmente zu erreichen, sollte das unterste Filterkerzensegment mit einem Zusatzgewicht beschwert sein.

Zur besseren Abdichtung der einzelnen Filterkerzensegmente untereinander können nach einem weiteren Merkmal der Erfindung Dichtungsringe vorgesehen sein, über die die einzelnen Filterkerzensegmte in auseinandergeschobenem Zustand aneinanderliegen. Die Dichtungsringe können jeweils aus dem für den Einsatzzweck passenden Material bestehen.

Nach einem weiteren Merkmal der Erfindung ist vorgeschlagen, daß am Filterkerzensegment mit dem kleinsten Querschnitt innenseitig ein über das Filterkerzensegment mit dem größten Querschnitt vorstehender Strang befestigt ist. Sofern dieser Strang als Seil ausgebildet ist, können mit diesem Seil die Filterkerzensegmente bei hängender Anordnung angehoben und damit ineinandergeschoben werden. Ist der Strang als starre Stange ausgebildet, kann zum gleichen Zweck die Stange angehoben oder gesenkt werden. Mit einer solchen Stange besteht auch die Möglichkeit, die Filterkerze stehend anzuordnen. Um zu hohe Spannungen oder Pressungen zu vermeiden, sollte die Stange über eine Feder mit dem Filterkerzensegment verbunden sein.

Desweiteren kann der Filterkerze eine Hubeinrichtung zugeordnet sein, deren Hubstempel am Boden des untersten Filterkerzensegments zur Anlage bringbar und nach oben ausfahrbar ist. Der Hubstempel kann auch als Siebboden ausgebildet sein, um gleichzeitig die untersten Filterkerzensegmente mehrerer, nebeneinander hängender Filterkerzen anheben zu können. In den vorgenannten Fällen ist es zweckmäßig, die ineinderschiebbaren Filterkerzensegmente außenseitig mit Mitnahmevorsprüngen zu versehen.

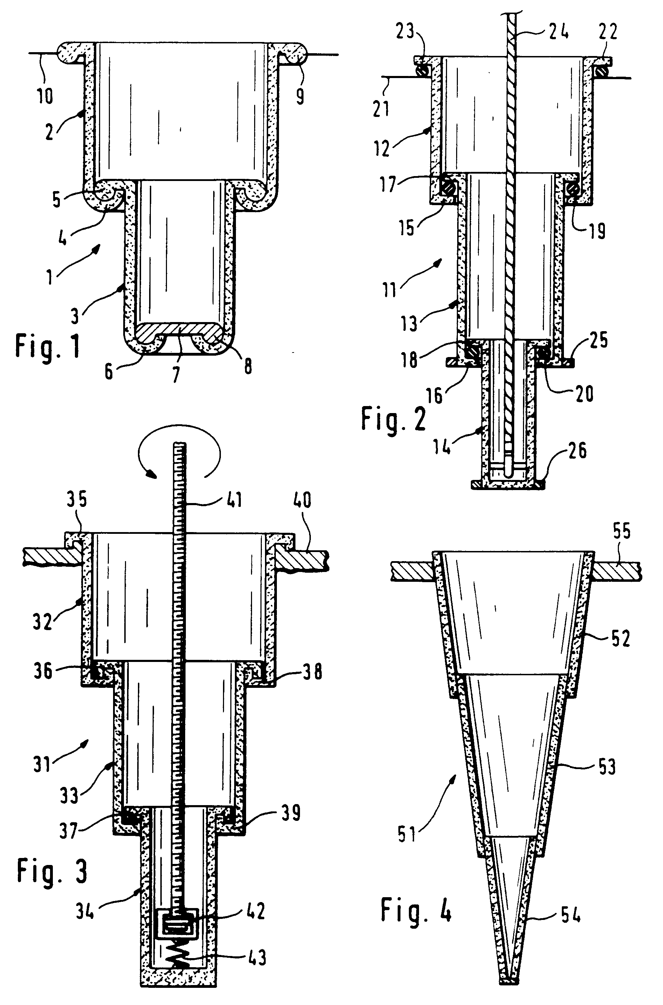

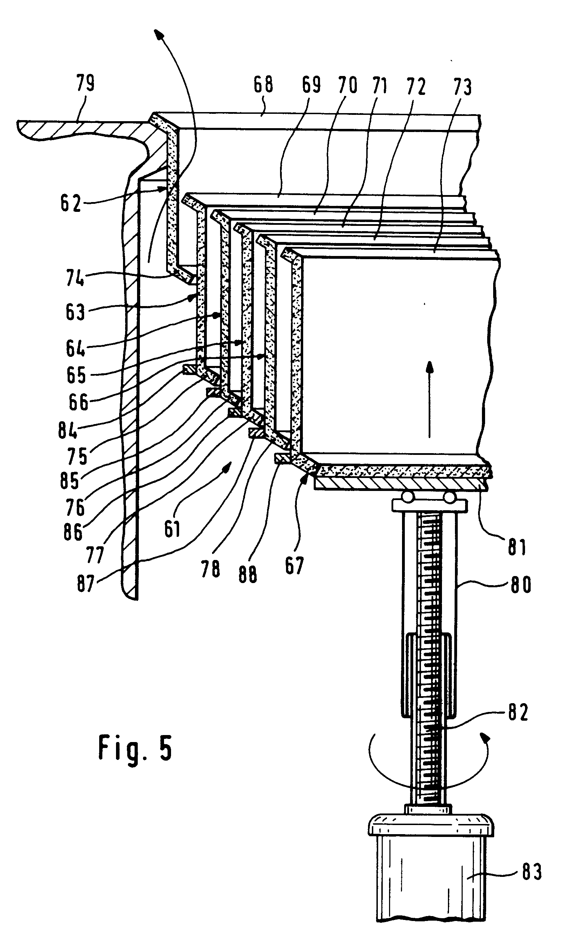

In der Zeichnung ist die Erfindung an Hand von Ausführungsbeispielen näher veranschaulicht. Es zeigen jeweils im Vertikalschnitt:
- Figur (1): eine Filterkerze mit wulst- bzw. rillenförmigen Stegen;
- Figur (2): eine Filterkerze mit waagerechten Stegen;
- Figur (3): eine Filterkerze mit U-förmigen Stegen;
- Figur (4): eine Filterkerze mit konischen Filterkerzensegmenten;
- Figur (5): eine Filterkerze mit geneigten Stegen.

Die in Figur (1) dargesellte Filterkerze (1) besteht aus zwei Filterkerzensegmenten (2, 3) zylinderischen Querschnittes. Beide Filterkerzensegmente (2, 3) sind teleskopisch ineinanderschiebbar. Im dargestellten auseinandergeschobenen Zustand hängt das untere Filterkerzensegment (3) an dem oberen Filterkerzensegment (2).

Hierzu weist das obere Filterkerzensegment (2) einen am unteren Rand rinnenförmig ausgebildeten Innensteg (4) auf, der sich über den gesamten Umfang erstreckt. In diesen Innensteg (4) faßt ein am oberen Rand des unteren Filterkerzensegments (3) angeformter Außensteg (5) ein, und zwar mit seinem wulstförmig ausgebildeten Rand. Die Querschnitte des Innensteges (4) und des Außensteges (5) sind derart aneinander angepaßt, daß sich eine großflächige und abdichtende Anlage ergibt.

Am unteren Ende weist das untere Filterkerzensegment (3) ebenfalls einen rinnenförmigen Innensteg (6) auf, der sich über den gesamten Umfang erstreckt. In diesen Innensteg (6) faßt eine Endplatte (7) mit ihrem entsprechend wulstförmig ausgebildeten Außenrand (8) ein. Die Endplatte (7) kann auch aus filterwirksamen Material bestehen. Vorzugsweise kann sie jedoch auch als schwere Metallplatte ausgebildet sein, um die Filterkerzensegmente (2, 3) in der gezeigten, auseinandergezogenen Stellung zu halten.

Am oberen Rand des oberen Filterkerzensegments (2) ist ein Außensteg (9) angeformt, der ebenfalls wulstförmig gestaltet ist. Mit diesem Außensteg (9) stützt sich das Filterkerzensegment (2) auf einer Trennwand (10̸) ab, die lediglich durch eine Linie angedeutet ist. Diese Trennwand (10̸) trennt innerhalb eines geschlossenen Filterapparates den oberen Reingasteil vom unteren Rohgasteil. Ein derartiger Filterapparat ist beispielsweise in der VDI-Richtlinie 3677, S. 16 beschrieben. Der Filterapparat hat einen unteren Rohgaseintritt und einen oberhalb der Trennwand (10̸) liegenden Reingasaustritt.

Die Filterkerzensegmente (2, 3) sind aus einem filterwirksamen Material geformt. Hier kommen beispielsweise keramische Materialien, aber auch poröse, organische und gesinterte Polymermaterialien, wie beispielsweise Polyäthylen, Polytetrafluoräthylen oder Polysulfone in Frage. Sie können auch entsprechende Beschichtungen beispielweise aus SiC oder Polytetrafluoräthylen haben. Das Rohgas tritt von außen nach innen durch das Material der Filterkerzensegmente (2, 3) ein und strömt dann über den von der Filterkerze (1) umschlossenen Innenraum nach oben in den oberen Teil des Filterapparates ein und verläßt ihn über den Reingasaustritt.

In Figur (2) ist ein anderes Ausführungsbeispiel einer Filterkerze (11) dargestellt. Diese Filterkerze (11) setzt sich aus drei teleskopisch ineinanderschiebbaren Filterkerzensegmenten (12, 13, 14) zusammen, die aus filterwirksamen Material geformt sind.

Das obere Filterkerzensegment (12) und das mittlere Filterkerzensegment (13) weisen untenseitig waagerecht vorspringende Innenstege (15, 16) auf. An dem Innensteg (15) des oberen Filterkerzensegments (12) stützt sich ein waagerecht am oberen Rand des mittleren Filterkerzensegments (13) vorstehender Außensteg (17) ab, während sich am Innensteg (16) des mittleren Filterkerzensegments ein waagerecht am oberen Rand des unteren Filterkerzensegments (14) vorstehender Außensteg (18) abstützt. Die Abstützung geschieht jeweils über Dichtungsringe (19, 20̸), die für eine Abdichtung über den gesamten Umfang sorgen. Die Filterkerzensegmente (12, 13, 14) haben ansonsten zylindrischen Querschnitt mit sich von Segment zu Segment nach unten verringerndem Durchmesser. Das untere Filterkerzensegment (14) ist untenseitig geschlossen ausgebildet.

Die Filterkerze (11) ist entsprechend dem Beispiel gemäß Figur (1) an einer Trennwand (21) eines hier nicht näher dargestellten Filterapparates aufgehängt. Hierzu ist an dem oberen Filterkerzensegment (12) ein waagerecht vorstehender Außensteg (22) angeformt, der auf einem Dichtungsring (23) aufliegt. Die Gasführung ist dieselbe, wie zum Ausführungsbeispiel gemäß Figur (1) beschrieben, d. h. das Rohgas tritt von außen durch die Filterkerzensegmente (12, 13, 14) in den von ihnen umschlossenen Innenraum ein und strömt dann nach oben ab.

Im Bodenbereich des unteren Filterkerzensegments (14) ist das untere Ende eines Seils (24) befestigt. Über dieseses Seil können die Filterkerzensegmente (12, 13, 14) ineinandergeschoben und nach oben aus dem Filterapparat herausgezogen werden. Damit dabei die jeweils darüberliegenden Filterkerzensegmente (12, 13) mitgenommen werden, weisen das mittlere und das untere Filterkerzensegment (13, 14) außenseitig angebrachte Mitnahmeringe (25, 26) auf, die nachträglich angebracht, beispielsweise aufgeklebt worden sind.

In Figur (3) ist eine weitere Filterkerze (31) dargestellt, die - wie bei dem Ausführungsbeispiel gemäß Figur (2) - aus drei teleskopisch ineinanderschiebbaren Filterkerzensegmenten (32, 33, 34) zusammengesetzt ist. Die Filterkerzensegmente (32, 33, 34) haben zylindrischen Querschnitt und unterscheiden sich von denen nach Figur (2) nur durch andere Stegausbildungen.

Sämtliche Filterkerzensegmente (32, 33, 34) weisen am oberen Rand im Querschnitt U-förmige Außenstege (35, 36, 37) auf. Die Außenstege (36, 37) der mittleren und unteren Filterkerzensegmente (33, 34) korrespondieren mit im Querschnitt U-förmigen Innenstegen (38, 39) am jeweils unteren Rand der oberen und mittleren Filterkerzensegmente (32, 33), d. h. jeweils ein Paar von Außen- und Innenstegen (36, 38) bzw. (37, 39) fassen formschlüssig ineinander, und zwar über den gesamten Umfang. Auf diese Weise hängen die Filterkerzensegmente (32, 33, 34) aneinander.

Das obere Filterkerzensegment (32) stützt sich über den Außensteg (35) an einer Trennwand (40̸) eines hier nicht näher dargestellten Filterapparates ab. Hinsichtlich des Aufbaues eines solchen Filterapparates wird auf die Beschreibung zu Figur (1) Bezug genommen. Das Rohgas tritt von außen durch das filterwirksame Material, aus dem die Filterkerzensegmente (32, 33, 34) bestehen, in den von ihnen umgebenen Innenraum ein und strömt nach oben ab.

Senkrecht durch den Innenraum der Filterkerzensegmente (32, 33, 34) erstreckt sich eine Gewindestange (41), die an ihrem hier nicht dargestellten Ende heb- und senkbar aufgehängt ist. Ihr unteres Ende ist über ein Axiallager (42) mit einer Schraubenfeder (43) verbunden, welche mit dem Boden des unteren Filterkerzensegments (34) gekoppelt ist. Durch Absenken der Gewindestange (41) kann die Schraubenfeder (43) zusammengedrückt werden und arbeitet dann als Druckfeder. Auf diese Weise kann die Flächenpressung zwischen den Außenstegen (36, 37) und den Innenstegen (38, 39) bzw. dem Außensteg (35) mit der Trennwand (40̸) erhöht und damit die Abdichtung in diesen Bereichen verbessert werden. Außerdem werden die Filterkerzensegmente (32, 33, 34) in dem gezeigten auseinandergezogenen Zustand festgehalten.

Die Gewindestange (41) eignet sich auch zum Ineinanderschieben und Hochziehen der Filterkerzensegmente (32, 33, 34). In diesem Falle müssen jedoch - wie bei dem Ausführungsbeispiel gemäß Figur (2) - hier nicht dargestellte Mitnahmeringe oder dergleichen an den Außenseiten der Filterkerzensegmente (33, 34) angebracht werden.

In Figur (4) ist eine weitere Filterkerze (51) dargestellt, die aus drei Filterkerzensegmenten (52, 53, 54) aus porösem, filterwirksamen Material besteht. Die Filterkerzensegmente (52, 53, 54) sind konisch mit sich nach unten verringernden Durchmessern gestaltet. Dabei ist jeweils der untere Durchmesser des oberen Filterkerzensegmentes (52, 53) geringer als der obere Durchmesser des sich jeweils nach unten anschließenden Filterkerzensegmentes (53) bzw. (54), so daß sich die einzelnen Filterkerzensegmente (52, 53, 54) überlappen, jedoch nicht nach unten herausrutschen können. Da die Konuswinkel aller Filterkerzensegmente (52, 53, 54) gleich sind, liegen sie untereinander in dem Überlappungsbereich flächig aneinander an.

Das obere Filterkerzensegment (52) hängt in einer entsprechenden konischen Öffnung einer Trennwand (55), die zu einem hier nicht näher dargestellten Filterapparat der oben beschriebenen Art gehört. Die Konusöffnung in der Trennwand (55) ist ebenfalls so gestaltet, daß das obere Filterkerzensegment (52) nicht nach unten herausrutschen kann. Das Rohgas tritt von außen in den von der Filterkerze (51) umschlossenen Innenraum ein und strömt nach oben ab.

In Figur (5) ist eine nur teilweise dargestellte Filterkerze (61) gezeigt, die aus insgesamt sechs Filterkerzensegmenten (62, 63, 64, 65, 66, 67) zusammengesetzt ist, welche teleskopisch ineinanderschiebbar sind und aus einem porösen filterwirksamen Material bestehen. Die Filterkerzensegmente (62) bis (67) sind jeweils zylindrisch ausgebildet und weisen an ihren oberen Rändern Außenstege (68, 69, 70̸, 71, 72, 73) auf, die sich jeweils über den gesamten Umfang erstrecken und schräg nach oben gerichet sind. Die Außenstege (69, 70̸, 71, 72, 73) korrespondieren mit jeweils am unteren Ende vorspringenden Innenstegen (74, 75, 76, 77, 78) an den Filterkerzensegmenten (62, 63, 64, 65, 66), welche schräg nach unten gerichtet sind.

Ihr Konuswinkel entspricht dem der Außenstege (69, 70̸, 71, 72, 73), so daß zwischen diesen und den Innenstegen (74, 75, 76, 77, 78) in auseinandergeschobenem Zustand eine flächige Anlage gegeben ist.

Das obere Filterkerzensegment (62) hängt in einer Öffnung eines Gehäuses (79) eines Filterapparates, der hier ansonsten nicht näher dargestellt ist. Hierzu stützt sich das obere Filterkerzensegment (62) über den Außensteg (68) an einer entsprechend konisch gestalteten Auflagefläche der Öffnung ab. Sämtliche Filterkerzensegmente (62) bis (67) werden von außen nach innen durchströmt, wie schon oben zum Ausführungsbeispiel gemäß Figur (1) beschrieben.

Unterhalb der Filterkerze (61) ist ein Hubstempel (80̸) vorgesehen, der über eine Endplatte (81) an dem unteren Filterkerzensegment (67) anliegt. Durch den Hubstempel (80̸) erstreckt sich eine Spindel (82), die von einem Elektromotor (83) angetrieben ist. Durch Verdrehen der Spindel (82) kann der Hubstempel (80̸) vertikal nach oben oder nach unten verfahren werden.

Im dargestellten Zustand ist der Hubstempel (80̸) teilweise nach oben ausgefahren, so daß die Filterkerzensegmente (63, 64, 65, 66, 67) schon ineinandergeschoben sind. Für deren gegenseitige Mitnahme sind an den Außenseiten Mitnahmeringe (84, 85, 86, 87, 88) vorgesehen, auf denen sich das jeweils obere Filterkerzensegment (62, 63, 64, 65, 66) beim Ineinanderschieben abstützen kann. Statt der Mitnahmeringe (84, 85, 86, 87, 88) kann auch eine entsprechend breite Endplatte (81) verwendet werden, auf der sich dann nacheinander die Filterkerzensegmente (62, 63, 64, 65, 66, 67) beim Hochfahren des Hubstempels (80̸) absetzen.

## Patentansprüche

1. Filterkerze (1, 11, 31, 51, 61), inbesondere für Filterapparate für die Gasfiltration, wobei die Filterkerze (1, 11, 31, 51, 61) aus einem eigenstabilen, porösen, gesinterten Kunststoff- oder Metall oder aus einem eigenstabilen, porösen Keramikmaterial besteht,
dadurch gekennzeichnet, daß die Filterkerze (1, 11, 31, 51, 61) in Filterkerzensegmente (2, 3; 12, 13, 14; 32, 33, 34; 52, 53, 54; 62, 63, 64, 65, 66, 67) unterteilt ist, die aus einer Transportposition, bei der die Filterkerzensegmente (2, 3; 12, 13, 14; 32, 33, 34; 52, 53, 54; 62, 63, 64, 65, 66, 67) teleskopisch ineinandergeschoben sind, in eine Filtrierposition bringbar sind, bei der die Filterkerzensegmente (2, 3; 12, 13, 14; 32, 33, 34; 52, 53, 54; 62, 63, 64, 65, 66, 67) eine große Filterkerze bildend vollständig auseinandergezogen sind.

2. Filterkerze nach Anspruch 1,
dadurch gekennzeichnet, daß die Filterkerzensegmente (2, 3; 12, 13, 14; 32, 33, 34; 52, 53, 54; 62, 63, 64, 65, 66, 67) sich im auseinandergeschobenen Zustand formschlüssig aneinander abstützen.

3. Filterkerze nach Anspruch 2,
dadurch gekennzeichnet, daß sich die Abstützung über den gesamten Umfang erstreckt.

4. Filterkerze nach Anspruch 2 oder 3,
dadurch gekennzeichnet, daß die Filterkerzensegmente (2, 3; 12, 13, 14; 32, 33, 34; 62, 63, 64, 65, 66, 67) sich im auseinandergeschobenen Zustand gegenseitig abstützende Vorsprünge (4, 5; 15, 16, 17, 18; 36, 37, 38, 39; 69, 70̸, 71, 72, 73, 74, 75, 76, 77, 78) aufweisen.

5. Filterkerze nach Anspruch 4,
dadurch gekennzeichnet, daß die Vorsprünge als untenseitig nach innen und obenseitig nach außen vorstehende Stege (4, 5; 15, 16, 17, 18; 36, 37, 38, 39; 69, 70̸, 71, 72, 73, 74, 75, 76, 77, 78) ausgebildet sind.

6. Filterkerze nach Anspruch 5,
dadurch gekennzeichnet, daß die Stege (36, 37, 38, 39) U-förmig ausgebildet sind.

7. Filterkerze nach Anspruch 5,
dadurch gekennzeichnet, daß die Stege (15, 16, 17, 18) waagerecht ausgerichtet sind.

8. Filterkerze nach Anspruch 5,
dadurch gekennzeichnet, daß die nach innen vorstehenden Stege (74, 75, 76, 77, 78) schräg nach unten und die nach außen vorstehenden Stege (69, 70̸, 71, 72, 73) schräg nach oben gerichtet sind.

9. Filterkerze nach Anspruch 5,
dadurch gekennzeichnet, daß die nach innen gerichteten Stege (4) rinnenförmig und die nach außen gerichteten Stege (5) wulstförmig ausgebildet sind.

10. Filterkerze nach Anspruch 2 oder 3,
dadurch gekennzeichnet, daß die Filterkerzensegmente (52, 53, 54) derart konisch ausgebildet sind, daß der untere Durchmesser des jeweils äußeren Filterkerzensegmentes (52, 53) geringer als der obere Durchmesser des jeweils benachbarten inneren Filterkerzensegmentes (53, 54) ist.

11. Filterkerze nach einem der Ansprüche 2 bis 10̸,
dadurch gekennzeichnet, daß das unterste Filterkerzensegment mit einem Zusatzgewicht beschwert ist.

12. Filterkerze nach einem der Ansprüche 1 bis 11,
dadurch gekennzeichnet, daß die Filterkerzensegmente (12, 13, 14) in auseinandergeschobenem Zustand über Dichtungsringe (19, 20̸) aneinanderliegen.

13. Filterkerze nach einem der Ansprüche 1 bis 12,
dadurch gekennzeichnet, daß am Filterkerzensegment (14, 34) mit dem kleinsten Querschnitt innenseitig ein über das Filterkerzenelement (12, 32) mit dem größten Querschnitt vorstehender Strang (24, 41) befestigt ist.

14. Filterkerze nach Anspruch 13,
dadurch gekennzeichnet, daß der Strang als Seil (24) ausgebildet ist.

15. Filterkerze nach Anspruch 13,
dadurch gekennzeichnet, daß der Strang als Stange (41) ausgebildet ist.

16. Filterkerze nach Anspruch 15,
dadurch gekennzeichnet, daß die Stange (41) über eine Feder (43) mit dem Filterkerzensegment (34) verbunden ist.

17. Filterkerze nach einem der Ansprüche 1 bis 16,
dadurch gekennzeichnet, daß der Filterkerze (61) eine Hubeinrichtung (80̸, 81, 82, 83) zugeordnet ist, deren Hubstempel (80̸) am Boden (81) des untersten Filterkerzensegments (67) zur Anlage bringbar und nach oben ausfahrbar ist.

18. Filterkerze nach einem der Ansprüche 13 bis 16,
dadurch gekennzeichnet, daß die ineinanderschiebbaren Filterkerzensegmente (13, 14; 63, 64, 65, 66, 67) außenseitig Mitnahmevorsprünge (25, 26; 84, 85, 86, 87, 88) aufweisen.

## Claims

1. A filter candle (1, 11, 31, 51, 61), particularly for filter apparatuses for gas filtration, wherein the filter candle (1, 11, 31, 51, 61) consists of an inherently stable, porous, sintered plastic, metal or ceramic material, characterised in that the filter candle (1, 11, 31, 51, 61) is subdivided into filter candle segments (2, 3; 12, 13, 14; 32, 33, 34; 52, 53, 54; 62, 63, 64, 65, 66, 67) which can be brought from a transport position, in which the filter candle segments (2, 3; 12, 13, 14; 32, 33, 34; 52, 53, 54; 62, 63, 64, 65, 66, 67) are slid into each other telescopically, into a filtration position in which the filter candle segments (2, 3; 12, 13, 14; 32, 33, 34; 52, 53, 54; 62, 63, 64, 65, 66, 67) are completely extended, forming a large filter candle.

2. A filter candle according to claim 1, characterised in that in the extended state the filter candle segments (2, 3; 12, 13, 14; 32, 33, 34; 52, 53, 54; 62, 63, 64, 65, 66, 67) are supported on each other with a positive fit.

3. A filter candle according to claim 2, characterised in that the support extends over the entire periphery.

4. A filter candle according to claims 2 or 3, characterised in that the filter candle segments (2, 3; 12, 13, 14; 32, 33, 34; 52, 53, 54; 62, 63, 64, 65, 66, 67) have projections (4, 5; 15, 16, 17, 18; 36, 37, 38, 39; 69, 70, 71, 72, 73, 74, 75, 76, 77, 78) which are mutually supporting in the extended state.

5. A filter candle according to claim 4, characterised in that the projections are constructed as ribs (4, 5; 15, 16, 17, 18; 36, 37, 38, 39; 69, 70, 71, 72, 73, 74, 75, 76, 77, 78) which project inwards on the bottom side and outwards on the top side.

6. A filter candle according to claim 5, characterised in that the ribs (36, 37, 38, 39) are of U-shaped construction.

7. A filter candle according to claim 5, characterised in that the ribs (15, 16, 17, 18) are aligned horizontally.

8. A filter candle according to claim 5, characterised in that the inwardly projecting ribs (74, 75, 76, 77, 78) are oriented slanting downwards and the outwardly projecting ribs (69, 70, 71, 72, 73) are oriented slanting upwards.

9. A filter candle according to claim 5, characterised in that the inwardly oriented ribs (4) are of channel-like construction and the outwardly oriented ribs (5) are of bead-like construction.

10. A filter candle according to claim 2 or 3, characterised in that the filter candle segments (52, 53, 54) are of conical construction, in such a way that the bottom diameter of the outer filter candle segment (52, 53) in each case is less than the top diameter of the adjacent inner filter candle segment (53, 54) in each case.

11. A filter candle according to any one of claims 2 to 10, characterised in that the lowest filter candle segment is weighted with an additional weight.

12. A filter candle according to any one of claims 1 to 11, characterised in that in the extended state the filter candle segments (12, 13, 14) adjoin each other via sealing rings (19, 20).

13. A filter candle according to any one of claims 1 to 12, characterised in that a length of material (24, 41) which projects above the filter candle segment (12, 32) with the largest cross-section is fastened on the inside to the filter candle segment (14, 34) with the smallest cross-section.

14. A filter candle according to claim 13, characterised in that the length of material is constructed as a cord (24).

15. A filter candle according to claim 13, characterised in that the length of material is constructed as a rod (41).

16. A filter candle according to claim 15, characterised in that the rod (41) is attached to the filter candle segment (34) via a spring (43).

17. A filter candle according to any one of claims 1 to 16, characterised in that a lifting device (80, 81, 82, 83) is associated with the filter candle (61), the lifting jack (80) of which can be brought into contact with the base (81) of the lowest filter candle segment (67) and can be extended upwards.

18. A filter candle according to any one of claims 13 to 16, characterised in that the filter candle segments (13, 14; 63, 64, 65, 66, 67) which can slide within one another have carrier projections (25, 26; 84, 85, 86, 87, 88) on their outsides.

## Revendications

1. Bougie filtrante (1, 11, 31, 51, 61), notamment pour des appareils de filtrage pour la filtration de gaz, la bougie filtrante (1, 11, 31, 51, 61) étant réalisée en métal, matériau plastique ou matériau céramique fritté, poreux, de forme stable, **caractérisée** en ce que la bougie filtrante (1, 11, 31, 51, 61) est divisée en segments de bougie filtrante (2, 3 ; 12, 13, 14 ; 32, 33, 34 ; 52, 53, 54 ; 62, 63, 64, 65, 66, 67), qui peuvent être amenés d'une position de transport, dans laquelle les segments de bougie filtrante (2, 3 ; 12, 13, 14 ; 32, 33, 34 ; 52, 53, 54 ; 62, 63, 64, 65, 66, 67) sont télescopiquement emboîtés les uns dans les autres, à une position de filtrage dans laquelle les segments de bougie filtrante (2, 3 ; 12, 13, 14 ; 32, 33, 34 ; 52, 53, 54 ; 62, 63, 64, 65, 66, 67) sont entièrement déployés et forment une grande bougie filtrante.

2. Bougie filtrante selon la revendication 1, **caractérisée** en ce qu'à l'état déployé, les segments de bougie filtrante (2, 3 ; 12, 13, 14 ; 32, 33, 34 ; 52, 53, 54 ; 62, 63, 64, 65, 66, 67) s'appuient les uns contre les autres en engagement positif.

3. Bougie filtrante selon la revendication 2, **caractérisée** en ce que l'appui s'étend sur toute la périphérie.

4. Bougie filtrante selon la revendication 2 ou 3, **caractérisée** en ce que les segments de bougie filtrante (2, 3 ; 12, 13, 14 ; 32, 33, 34 ; 62, 63, 64, 65, 66, 67) présentent des saillies (4,5 ; 15, 16, 17, 18 ; 36,37,38,39 ; 69, 70, 71, 72, 73, 74, 75, 76, 77, 78) s'appuyant les unes contre les autres à l'état déployé.

5. Bougie filtrante selon la revendication 4, **caractérisée** en ce que les saillies sont réalisées sous la forme de nervures (4, 5 ; 15, 16, 17, 18 ; 36, 37, 38, 39 ; 69, 70, 71, 72, 73, 74, 75, 76, 77, 78) dépassant respectivement vers l'intérieur, sur le dessous des segments, ou vers l'extérieur, sur le dessus des segments.

6. Bougie filtrante selon la revendication 5, **caractérisée** en ce que les nervures (36, 37, 38, 39) sont réalisées en forme de U.

7. Bougie filtrante selon la revendication 5, **caractérisée** en ce que les nervures (15, 16, 17, 18) s'étendent horizontalement.

8. Bougie filtrante selon la revendication 5, **caractérisée** en ce que les nervures dépassant vers l'intérieur (74, 75, 76, 77, 78) s'étendent en inclinaison vers le bas, et les nervures dépassant vers l'extérieur (69, 70, 71, 72, 73) s'étendent en inclinaison vers le haut.

9. Bougie filtrante selon la revendication 5, **caractérisée** en ce que les nervures s'étendant vers l'intérieur (4) sont réalisées en forme de rigole, et les nervures s'étendant vers l'extérieur (5) en forme de bourrelet.

10. Bougie filtrante selon la revendication 2 ou 3, **caractérisée** en ce que les segments de bougie filtrante (52, 53, 54) sont réalisés avec une conicité telle que le diamètre inférieur du segment extérieur respectif (52, 53) de bougie filtrante est plus petit que le diamètre supérieur du segment intérieur voisin respectif (53, 54) de bougie filtrante.

11. Bougie filtrante selon l'une des revendications 2 à 10, **caractérisée** en ce que le segment de bougie filtrante le plus bas est alourdi par un poids supplémentaire.

12. Bougie filtrante selon l'une des revendications 1 à 11, **caractérisée** en ce que les segments de bougie filtrante (12, 13, 14) s'appliquent les uns contre les autres à l'état déployé par l'intermédiaire de bagues d'étanchéité (19, 20).

13. Bougie filtrante selon l'une des revendications 1 à 12, **caractérisée** en ce qu'une corde (24, 41) est fixée à l'intérieur du segment de bougie filtrante de plus petite section (14, 34), corde qui s'étend au-delà du segment de bougie filtrante de plus grande section (12, 32).

14. Bougie filtrante selon la revendication 13, **caractérisée** en ce que la corde est réalisée sous la forme d'un câble (24).

15. Bougie filtrante selon la revendication 13, **caractérisée** en ce que la corde est réalisée sous la forme d'une tige (41).

16. Bougie filtrante selon la revendication 15, **caractérisée** en ce que la tige (41) est assemblée au segment de bougie filtrante (34) par l'intermédiaire d'un ressort (43).

17. Bougie filtrante selon l'une des revendications 1 à 16, **caractérisée** en ce qu'un dispositif de levage (80, 81, 82, 83) est associé à la bougie filtrante (61), dispositif dont le piston de levage (80) peut être amené en application contre le fond (81) du segment de bougie filtrante le plus bas (67) et déployé vers le haut.

18. Bougie filtrante selon l'une des revendications 13 à 16, **caractérisée** en ce que les segments de bougie filtrante emboîtables les uns dans les autres (13, 14 ; 63, 64, 65, 66, 67) présentent extérieurement des saillies d'entraînement (25, 26 ; 84, 85, 86, 87, 88).
